# EUROPEAN PATENT APPLICATION

(11) **EP 1 527 861 A2**
(43) Date of publication of application: **04.05.2005**
(21) Application number: 04256496.3
(22) Date of filing: 21.10.2004
(51) Int. Cl.: B28B 1/00, B29C 67/00

(54) **Alginate-based materials, methods of application thereof, and systems for using the alginate-based materials**

(30) Priority: 28.10.2003 US 695565
(71) Applicant: Hewlett-Packard Development Company, L.P., Houston, TX 77070 (US)
(72) Inventor: Farr, Isaac, Corvallis OR 97333 (US); Hovagimian, Howard, Corvallis OR 97330 (US); Lambright, Terry M., Corvallis OR 97330 (US)
(74) Representative: Jackson, Richard Eric

(57) **Abstract**

Solid freeform fabrication (SFF) systems for producing a three-dimensional object and methods of producing three-dimensional objects are disclosed. One SFF system 10, among others, includes a dispensing system 14 including an alginate-based material that includes an alginate-based powder and a binder. The dispensing system 14 is adapted to dispense the alginate-based material.

## Description

### BACKGROUND

Solid freeform fabrication (SFF) or layer manufacturing (LM) is a fabrication technology that builds an object of any complex shape layer-by-layer or point-by-point without using a pre-shaped tool (die or mold). This process begins with creating a Computer Aided Design (CAD) file to represent the geometry of a desired object. SFF technology enables direct translation of the CAD image data into a three-dimensional object. SFF technology can be used in applications such as verifying CAD database, evaluating design feasibility, testing part functionality, assessing aesthetics, checking ergonomics of design, aiding in tool and fixture design, creating conceptual models and sales/marketing tools, generating patterns for investment casting, reducing or eliminating engineering changes in production, and providing small production runs.

One SFF technique involves adding or depositing a build composition to form predetermined areas of a layer essentially point-by-point. These predetermined areas together constitute a thin section of a three-dimensional object as defined by a CAD geometry. Successive layers are then deposited in a predetermined sequence with a layer being affixed to its adjacent layers forming an integral three dimensional, multilayer object.

In a powder/binder SFF system an individual layer is printed by first spreading a thin layer of the powder and then dispensing the binder to adhere the powder together in selected regions to create the desired layer pattern. This process is repeated until all the layers have been printed. The binder joins powder together within a layer and between layers. After printing is complete, the unbound powder is removed, leaving a three-dimensional object with the desired geometry.

### SUMMARY

Briefly described, embodiments of this disclosure include solid freeform fabrication (SFF) systems and methods for producing three-dimensional objects. One exemplary SFF system, among others, includes a dispensing system including an alginate-based material that includes an alginate-based powder and a binder. The dispensing system is adapted to dispense the alginate-based material.

Methods of producing three-dimensional objects are also provided. One exemplary method includes, among others: providing an alginate-based powder, providing at least one binder, dispensing the alginate-based powder and the binder onto a build platform to form a layer of an alginate-based material, and forming a flexible three-dimensional object from the alginate-based material on the build platform.

### BRIEF DESCRIPTION OF THE DRAWINGS

Many aspects of the invention can be better understood with reference to the following drawings. The components in the drawings are not necessarily to scale. Moreover, in the drawings, like reference numerals designate corresponding parts throughout the several views.
FIG. 1 illustrates an embodiment of a solid freeform fabrication (SFF) system.
FIG. 2 illustrates a flow diagram of a representative embodiment for forming a flexible three-dimensional object using the SFF system described in FIG. 1

### DETAILED DESCRIPTION

Alginate-based materials, methods of application thereof, and systems for using the alginate-based materials are provided. In particular, the embodiments relate to the use of alginate-based materials in the manufacture of flexible three-dimensional objects by solid freeform fabrication (SFF) systems and methods. The term flexible three-dimensional object refers to elastomeric objects that are sufficiently rigid to maintain a fixed volume and shape to an extent, which is appropriate for the specific use.

The alginate-based material includes, but is not limited to, an alginate-based powder and at least one binder. The alginate-based powder includes, but is not limited to, one or more alginate compounds, one or more fillers, and one or more multivalent cations. In addition, the alginate-based powder and/or the binder can each include additional components such as, but not limited to, retardants, wetting agents, viscosity modifiers, surface tension modifiers, fibers, colorants, dispersants, antioxidants, water retention additives and solvents.

The flexible three-dimensional objects formed from the alginate-based material have elastomeric properties. In general, the elastomeric properties are the product of using alginate compounds to fabricate the flexible three-dimensional object. By using this material it is possible to directly print a flexible part without any post-processing required. Flexible parts are required for applications that require functions such as sealing, bending, or twisting, for example. In these applications, rigid parts are unable to meet the required function.

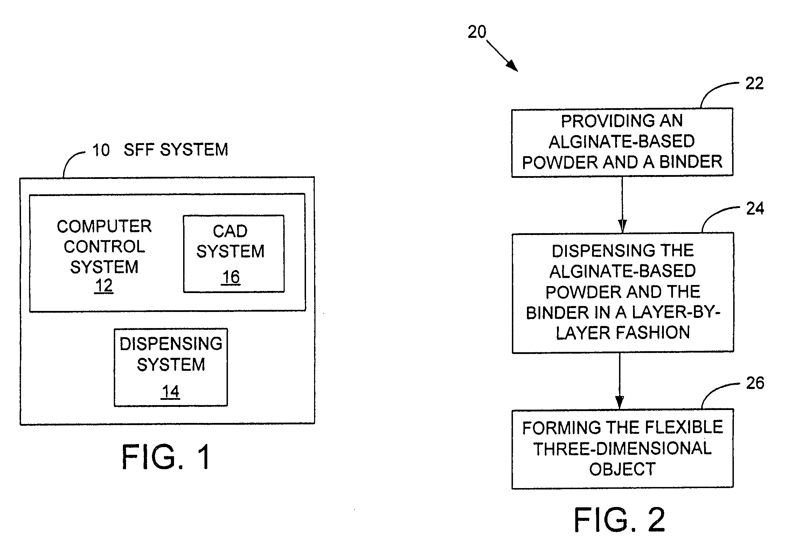

FIG. 1 illustrates a block diagram of a representative SFF system 10 that includes, but is not limited to, a computer control system 12 and a dispensing system 14. In addition, the SFF system 10 can optionally include a conventional (*e.g.*, a thermal, infrared) heating system, a positioning system, and a build platform temperature control system. The computer control system 12 includes a process control system that is adapted to control the dispensing system 14, the positioning system, and the build platform temperature control system. Furthermore, the computer control system 12 includes, but is not limited to, a Computer Aided Design (CAD) system 16 or other SSF CAD-related systems.

The dispensing system 14 includes, but is not limited to, conventional powder spreading technologies, conventional ink-jet technologies, and conventional fluid coating technologies. The components of the alginate-based material can be dispensed using one or more of these technologies in an iterative and/or simultaneous fashion.

In one embodiment, the alginate-based powder is dispensed using conventional powder spreading techniques. The powder spreading system includes a mechanism to evenly spread a predetermined layer thickness of powder in a uniform manner from a "feed bin" to a "build bin". The term "feed bin" is meant to include methods of containing powder to be spread in a layer-by-layer fashion. The term "build bin" is meant to include the area in which an object is being built. Typically, the powder spreading system operates by elevating the feed bin and spreading the available powder with a rotating roller into the build bin. It should also be noted that in another embodiment, the alginate-based powder is dispensed using ink-jet technologies as a slurry (U.S. Patent 6,596,224, which is incorporated herein by reference).

Ink-jet technology, such as drop-on-demand and continuous flow ink-jet technologies, can be used to dispense chemical compositions onto a build platform. The dispensing system 14 can include at least one conventional ink-jet printhead (*e.g.*, thermal ink-jet printhead and/or a piezo ink-jet print head) adapted to dispense (*e.g.*, jet) one or more chemical compositions through one or more of a plurality of ink-jet printhead dispensers. In addition, the ink-jet printhead can include a plurality of ink-jet compartments (*e.g.*, tanks or wells for containing the components) that are capable of holding the chemical compositions and are fluidically coupled to the ink-jet printhead dispensers. The ink-jet printhead dispenser can be heated to assist in dispensing viscous chemical compositions. For example, the ink-jet printhead dispenser can be heated up to about 200°C, and preferably in the range of 70 to 120°C.

In one embodiment, the dispensing system 14 includes a separate ink-jet printhead for components (*e.g.*, binders, colorants, and solvents) of the alginate-based material. For example, in a SFF system 10 having two ink-jet printheads, one ink-jet printhead holds a binder and one ink-jet printhead holds a colorant.

The SFF system 10 can be incorporated into processes that are used to fabricate or construct three-dimensional objects in an iterative-layered process. The computer control system 12 is capable of being selectively adjusted to control the output from the dispenser system 14, which controls the thickness and pattern of each component in each layer of the iterative process.

For example, the alginate-based powder and the binder can be dispensed onto the build platform in a variety of patterns. The patterns can take the form of, but not limited to, alternating layers of the alginate-based powder and the binder, alternating offset-checkerboard layers of the alginate-based powder and the binder, and alternating side-by-side strips of the alginate-based powder and the binder. In addition, the patterns of the alginate-based powder and the binder can vary depending on the thickness of the powder and volume (*e.g.*, drops) of the binder. In this regard, multiple passes (*e.g.*, scans) across the build platform 20 can be conducted to achieve the appropriate spacing of the alginate-based powder and the binder.

In general, the amount of alginate-based powder spread during each pass can be about 10 microns to 1000 microns, about 10 microns to 200 microns, and about 20 microns to 50 microns. However, the desirable amount of powder spread depends upon a number of factors such as, but not limited to, the particulate size, the required resolution, and the desired surface finish.

In general, the volume of the components dispensed using ink-jet technologies are from about 0.1 picoliters to 500 picoliters, about 1 picoliters to 100 picoliters, and about 5 picoliters to 35 picoliters. However, the desirable ejected volume of these components depends on a number of factors such as, but not limited to, the concentration and the chemical characteristics of the components; the temperature of the components, the desired resolution (*e.g.*, 600 drops per inch), and the design of the print-head firing chamber.

FIG. 2 is a flow diagram describing a representative method 30 for forming an object using the SFF system 10. The alginate-based powder and the binder are provided, as shown in block 22. The alginate-based powder and the binder are dispensed onto the build platform in a layer-by-layer fashion, as shown in block 24. For example, the alginate-based powder if first spread onto the build platform and then the binder is dispensed onto portions of the alginate-based powder as controlled by the computer system 12. The alginate-based powder and the binder are commingled and form a layer of the alginate-based material. Upon interaction with the binder, the alginate compounds are crosslinked with a multivalent cation to form an alginate hydrogel. After a plurality of layers of the alginate-based powder and the binder are dispensed onto the build platform, the flexible three-dimensional object is formed, as shown in block 26.

As mentioned above, the alginate-based material includes the alginate-based powder and at least one binder. The alginate-based powder can be about 20% to 95% of the alginate-based material, while the binder can be about 5% to 80% by weight of the alginate-based material. More specifically, the alginate-based powder can be about 50% to 90% of the alginate-based material, while the binder can be about 10% to 50% by weight of the alginate-based material.

In addition, the alginate-based powder includes one or more alginate compounds, one or more fillers, and one or more multivalent cations. The function of the alginate compound is to swell, then become crosslinked by the multivalent cations to form the flexible three-dimensional object in a layer-by-layer manner. In addition, the cross-linked polymers provide the three-dimensional object elastomeric properties. The alginate compound can include, but is not limited to, alginic acid, sodium alginate, potassium alginate, magnesium alginate, calcium alginate, derivatives of each of these, and combinations of each of these. In addition, the alginate compound includes the M form (mannuroic acid), G form (guluronic acid), and combinations thereof. The alginate compound includes the GG, MM, and MG copolymer alginate types. The alginate-based material can include the alginate compound from 20% to about 95% and from about 50% to about 90% by weight of the alginate-based material.

The filler functions to, at least, stiffen and smooth the surface of the three-dimensional object. The fillers can include, but are not limited to, ceramics, glasses, naturally occurring materials and their synthetic derivatives, and polymer fillers. For example, the filler can include sand, quartz, silicon dioxide, aluminum oxide, titanium dioxide, aluminum hydroxide, nitrides (*e.g.* silicon nitride), kaolin, talc, wollstonite, feldspar, mica, starch, starch derivatives, cellulose, cellulose derivatives, zinc glass, boron silicate glass, polycarbonates, polyepoxides, polyethylene, polyacryates and polymethacrylates. The alginate-based material can include the filler from 5% to about 90% and from about 5% to about 50% (more narrow range) by weight of the alginate-based material.

The multivalent cation functions to, at least, cross-link the alginate compounds. The multivalent cation can include, but is not limited to, metal oxides, metal salts, and combinations thereof. The metal oxides can include, but are not limited to, titanium dioxide, zirconium oxide, aluminum oxide (neutral, acidic, basic), barium oxide, calcium oxide, magnesium oxide, zinc oxide as well as the sintered ceramics thereof such as zinc oxide/magnesium oxide. The metal salts include, but are not limited to, aluminum chloride, aluminum stearate, aluminum sulphate, aluminum acetate, aluminum nitrate, calcium carbonate, calcium ascorbate, calcium stearate, calcium lactate, calcium saccharate, calcium hydrogen phosphate, calcium chloride, calcium hydroxide, calcium phosphate, calcium acetate, hydroxyapatite, calcium nitrate, calcium fluoroborate, zinc chloride, zinc stearate, zinc acetate, zinc gluconate, zinc sulphate, zinc nitrate, barium nitrate, strontium nitrate, magnesium sulfate, magnesium nitrate, iron chloride, iron nitrate, iron sulphate, and the hydroxides of magnesium, calcium, barium, aluminum, boron, zirconium, hafnium, titanium, chromium, vanadium. The alginate-based material can include the multivalent cation from 0.01% to about 50% and from about 0.5% to about 30% (more narrow range) by weight of the alginate-based material.

The binder functions to, at least, swell the alginate powder thereby facilitating the hydrogel formation process. The binder can include, but is not limited to, a swelling agent such as water. As mentioned above, the alginate-based powder and/or the binder can include additional components such as, but not limited to, retardants, wetting agents, viscosity modifiers, surface tension modifiers, fibers, colorants (*e.g.,* dyes, pigments, inks), dispersants, antioxidants, water retaining additives (*e.g.*, acrylamide and salts thereof, and acrylate polymers and copolymers), and solvents. In addition, the flexible three-dimensional object can be coated with a material that decreases water loss such as, but not limited to, polymeric coatings.

Additional components can be used in the alginate-based powder and/or the binder to obtain the proper balance of cross-linking, swelling, layer-to-layer adhesion, toughness, and glass transition temperature, of the three-dimensional object. Furthermore, the components can be used to alter the physical and/or chemical properties (*e.g.*, viscosity, reactivity, surface tension, bubble formation, and wetting of the ejection chamber) of the alginate-based powder and/or the binder prior to and/or after being dispensed.

The retardant functions to, at least, slow down the setting reaction of the alginate compound with the multivalent cations. The retardant can include, but is not limited to, sodium phosphate, potassium phosphate, potassium oxalate, sodium oxalate, sodium carbonate, potassium carbonate, boric acid, borax, malonic acid, isocitrate, amino acids, citric acid, salicylic acid, tartaric acid, oxalic acid, and combinations thereof. The alginate-based powder and/or the binder can include the retardant from 0% to about 20% and from about 0.01 % to about 20% by weight of the alginate-based powder and/or the binder.

The viscosity modifier functions to, at least, increase or decrease the viscosity of the alginate-based material and/or the binder. The viscosity modifier can include, but is not limited to, ethylene glycol diacetate, potassium aluminum sulphate, isopropanol, ethylene glycol monobutyl ether, diethylene monobutyl ether, glycerine triacetate, ethyl acetoacetate, polyvinyl pyrrolidone, polyethylene glycol, polyacrylic acid, sodium polyacrylate, and combinations thereof. The alginate-based powder and/or the binder can include the viscosity modifier from 0.01 % to about 50% and from about 0.01% to about 20% by weight of the alginate-based powder and/or the binder.

The surface tension modifier functions to, at least, increase or decrease the surface tension of the alginate-based material and/or the binder. The surface tension modifier can include, but is not limited to, low molecular weight (*e.g.*, about 30,000 to 1,000,000g/mol) water-soluble ethylene oxide-propylene oxide oligomers.

The alginate-based powder and/or the binder can include the surface tension modifier from 0.01% to about 30% and from about 0.1% to about 20% by weight of the alginate-based powder and/or the binder.

The addition of fibers to alginate-based powder and/or the binder may be performed to vary and/or improve the mechanical properties (*e.g.*, tensile and compressive strength), of the three-dimensional object. The fibers can include, but are not limited to, polymer fibers, ceramic fibers, natural fibers, carbon fibers, glass fibers, and combinations thereof. More specifically, the fibers can include, but are not limited to, cellulose fibers, wood fibers, polypropylene fibers, aramide fibers, silicon carbide fibers, aluminum silicate fibers, and derivatives of each of these exemplary fibers. The alginate-based powder and/or the binder can include fibers from 0.0 1 % to about 30% and from about 1% to about 20% by weight of the alginate-based powder and/or the binder.

It should be noted that viscosity, temperature, ratios, concentrations, amounts, and other numerical data might be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1% to about 5%" should be interpreted to include not only the explicitly recited concentration of about 0.1 wt% to about 5 wt%, but also include individual concentrations (*e.g.*, 1%, 2%, 3%, and 4%) and the sub-ranges (*e.g.*, 0.5%, 1.1%, 2.2%, 3.3%, and 4.4%) within the indicated range.

Many variations and modifications may be made to the above-described embodiments. All such modifications and variations are intended to be included herein within the scope of this disclosure and protected by the following claims.

## Claims

1. A method of producing a structure, comprising the steps of:
providing an alginate-based powder 22;
providing at least one binder 22;
dispensing the alginate-based powder and the binder onto a build platform to form a layer of an alginate-based material 24; and
forming a flexible three-dimensional object from the alginate-based material on the build platform 26.

2. The method of claim 1, wherein the alginate-based powder includes at least one alginate compound and at least one component selected from at least one filler and at least one multivalent cation.

3. The method of claim 2, further comprising:
dispensing the alginate-based powder and the binder onto the build platform independently, wherein the alginate-based powder and the binder on the build platform are commingled to form the layer of the alginate-based material.

4. The method of claim 2, wherein the alginate compound is selected from alginic acid and derivatives thereof, sodium alginate and derivatives thereof, potassium alginate and derivatives thereof, magnesium alginate and derivatives thereof, calcium alginate and derivatives thereof, and combinations thereof.

5. The method of claim 2, wherein the alginate-based powder includes components selected from a retardant, a wetting agent, a viscosity modifier, a surface tension modifier, a colorant, water retaining additives, fibers, and combinations thereof.

6. The method of claim 1, wherein the binder includes components selected from a retardant, a wetting agent, a viscosity modifier, a surface tension modifier, fibers, a colorant, water retaining additives, and combinations thereof.

7. The method of claim 2, wherein the alginate compound is from about 10% to 95% by weight of the alginate-based powder, the filler is from about 5 to 90% by weight of the alginate-based powder, and the multivalent cation is from about 0.01 % to 50% by weight of the alginate-based powder.

8. A solid freeform fabrication system for producing a three-dimensional object, comprising:
a dispensing system 14 including an alginate-based material that includes an alginate-based powder and a binder, wherein the dispensing system 14 is adapted to dispense the alginate-based material.

9. The solid freeform fabrication system of claim 8, wherein the dispensing system includes a powder spreading system.

10. The solid freeform fabrication system of claim 8, further comprising:
a computer control system 12 operative to control the dispensing system.

11. The solid freeform fabrication system of claim 8, further comprising:
a computer aided design system 16.
